# EUROPEAN PATENT APPLICATION

(11) **EP 1 987 949 A1**
(43) Date of publication of application: **05.11.2008**
(21) Application number: 07107204.5
(22) Date of filing: 30.04.2007
(51) Int. Cl.: B32B 27/32

(54) **Packaging Laminate**

(71) Applicant: Borealis Technology Oy, 06101 Porvoo (FI)
(72) Inventor: Laiho, Erkki, 06450 Porvoo (FI); Yli-Peltola, Juha, 00810 Helsinki (FI)
(74) Representative: Brunnbauer, Gerhard

(57) **Abstract**

The present invention relates to a packaging laminate comprising a paper substrate and functional layers made essentially from polyolefins. The packaging laminate in accordance with the present invention is particularly suitable for packaging of snack food and provides a satisfactory openability in order to provide a desired easy access to the packaged snack food.

## Description

The present invention relates to a packaging laminate, in particular suitable for snack food packaging, as well as a process for preparing same.

### Prior Art

Packaging laminates, in particular for food, such as snack food, are made by using different kinds of OPP-films or combinations thereof with paper. Also employed are metallised films, in particular films comprising a thin aluminum layer. Such food packaging laminates do have to fulfill specific requirements, in particular provision of a suitable light and oxygen barrier, provision of a suitable grease barrier, suitable sealability while providing at the same time for an easy opening of the package.

Prior art materials including OPP-films or BOPP-films, however, do require rather highly sophisticated processes of manufacture, which are detrimental in view of cost considerations. The use of metallised films further adds to problems in connection with cost considerations and also prevents or impairs the later use of these materials in energy recovery systems (thermal recycling). At the same time, customers prefer, according to market studies, non-metallised products and in particular products, which provide a paper-like appearance and feel.

Other fields of using laminates in food packaging are, in particular, containers for beverages, which also typically comprise various functional layers made from different polymers.

The international patent application WO 2005/014283, for example, discloses a laminate for use in producing a container for beverages, comprising a main paperboard substrate, being provided on one side thereof with a heat-sealable olefin polymer layer. On the other side, a functional barrier material is coated onto the paperboard substrate, such as an EVOH barrier layer. Finally, a further heat-sealable layer of an olefin polymer containing inorganic particulate fillers is coated on the barrier layer in order to enable suitable sealing of the container. The drawback of this type of laminate is the use of the rather expensive barrier layer prepared from functional polymers, such as EVOH.

US2003180487 A1 discloses an oxygen barrier laminate suitable for preparing beverage storage containers, comprising a paperboard substrate, a first polyolefin layer, a polyamide layer, and a second polyolefin layer, in combination with an EVOH oxygen barrier layer. The main drawback of this laminate is, again, the necessity to employ functional polymers, such as EVOH. Furthermore, the laminate comprises different types of polymers, most notably polyolefins as well as polyamides, which also impairs the recycling of the product.

US4526919 discloses an extrusion coating composition suitable for paper coating, comprising a blend of various polyolefins. This composition may be coated at high speed and over a wide range of coating weights while providing excellent adhesion to the paper substrate.

JP-A-52-138539 discloses a polypropylene composition for extrusion coating, comprising polypropylene, low-density polyethylene, and ethylene-propylene copolymer and an organic peroxide.

In the art there remains, however, the desire to further improve the laminates used for packaging.

### Object of the Present Invention

Accordingly, it is the object of the present invention to provide a packaging laminate, which overcomes at least one of the drawbacks associated with the prior art. In particular, the packaging laminate should be easy to produce and should be metal free. At the same time, the packaging laminate should provide suitable barrier properties enabling the packaging of grease-containing food, such as snack food. The packaging laminate should enable an easy packaging of the product to be packaged while enabling at the same time also the possibility to open the package without undue burden. Preferably the packaging laminate should comprise as few different types of polymers as possible and, in particular, it would be preferable to avoid functional polymers, such as EVOH, and also condensation polymers, such as polyamides.

### Brief Description of the Invention

The above object has been solved with the packaging laminate according to claim 1. Preferred embodiments are defined in subclaims 2 to 9. Furthermore, the present invention provides a process for preparing the packaging laminate in accordance with the present invention as defined in claim 10. Preferred embodiments are defined in subclaims 11 to 15.

Further preferred embodiments for the packaging laminate as well as for the process of preparing same are disclosed in the present specification.

### Detailed Description of the Present Invention

The present invention provides a packaging laminate comprising a paper substrate, a grease barrier layer, a light barrier layer, and a heat sealing layer, wherein the grease barrier layer, the light barrier layer and the heat sealing layer comprise polyolefins, and wherein furthermore the grease and the light barrier layer may be a single grease/light barrier layer.

In the packaging laminate in accordance with the present invention the heat sealing layer is one of the outer layers of the laminate and the grease barrier layer and the light barrier layer or the grease/light barrier layer are provided between the heat sealing layer and the paper substrate. In addition to the essential layers as mentioned above, the laminate in accordance with the present invention also may include further layers, such as adhesive layers or tie layers as well as further polymer layers provided on the side of the paper substrate not coated with the grease barrier layer, the light barrier layer or the grease/light barrier layer and the heat sealing layer. An adhesive layer, in particular, may be provided between the paper substrate and the first subsequent layer of the packaging laminate in accordance with the present invention, i.e., the grease barrier layer, the light barrier layer or the grease/light barrier layer. Suitable materials for such adhesive layers are known to the skilled person and illustrative examples are copolymers of olefins with acrylates, such as copolymers of ethylene and methylacrylate. A particular suitable example is a copolymer of ethylene and methylacrylate containing 9% methylacrylate as commercially available from DuPont under the trade name Elvaloy 1609 AC. Such adhesive layers improve the bonding strength between the paper substrate and the subsequent layer, but a similar function can also be provided by suitably activating the surface of the paper substrate and/or the subsequent layer, for example, by corona treatment.

The polymer layers to be provided on the side of the paper substrate not coated with the grease barrier layer, the light barrier layer or the grease/light barrier layer and the heat sealing layer may be selected as appropriate among any desired kind of polymer coating layer depending on the desired endues. The paper substrates, however, in particular the preferred paper substrates as further illustrated below, are highly suitable as the other outer layer of the laminate, since they particularly enable an easy printing of the material so that in a preferred embodiment in accordance with the present invention the paper substrate is second outer layer of the packaging laminate in accordance with the present invention.

### Paper substrate

The paper substrate to be employed in accordance with the present invention preferably is a paper substrate known as greaseproof paper in the art. Suitable examples thereof are commercially available, for example, from Nordic Paper and specific examples thereof include Candor, Super Perga Parchment, Super Perga Parchment Wet Strength, Super Perga Improved Surface XO, Super Perga Improved Surface O, and Super Perga Opaque Parchment. In particular, preferred is the use of a greaseproof paper such as Super Perga Parchment Wet Strength, Super Perga Improved Surface XO, Super Perga Improved Surface O, and Super Perga Opaque Parchment.

In any case, the paper substrate to be employed in accordance with the present invention should provide the main part of the mechanical properties of the packaging laminate and suitable paper substrates in particular provide basic weights (gsm:grams per square meter) of from 30 to 50, preferably 35 to 45, and in embodiments about 38 to 42, such as 40 or 41.

### Heat sealing layer

The heat-sealing layer, which is the other outer layer of the packaging laminate in accordance with the present invention, comprises a polyolefin and suitable polyolefins are, in particular, LLDPE (linear low density polyethylene) materials. Preferred are, in particular, bimodal LLDPE materials (with respect to the molecular weight distribution) since these materials provide the desired balance of heat sealability and mechanical integrity, so that heat sealing can be achieved at rather low temperatures while enabling a secure closing of the package. At the same time, the desired provision of an easy opening of the package is not sacrificed.

Suitable polyolefins for use as heat sealing layer, in particular LLDPE materials as identified above, more preferably bimodal LLDPE materials, typically display an MFR (190°C, 2.16 kg load) of from 10 to 35 g/10 min, more preferably 12 to 30 g/10 min, more preferably 15 to 25 g/10 min, and in particular 17 to 20 g/10 min.

The LLDPE material preferably employed in the heat-sealing layer may comprise one type of comonomer (typically an a olefin having from 4 to 12 carbon atoms, in particular 4 to 8 carbon atoms), but the LLDPE material may also comprise two or more, preferably two different comonomers. The distribution of the at least one and in embodiments two or more comonomers within the LLDPE material may be uniform or may be bimodal as well, such as a higher content of comonomer in the higher molecular weight part or the lower molecular weight part or different types of comonomers in the lower molecular weight part and the higher molecular weight part, respectively.

The LLDPE preferably employed in the invention is typically a mixture of two or more LLDPE components, e.g. produced by blending or by two-or- more stage polymerization reactions. The constituent polyethylenes may be homopolymers, copolymers, terpolymers or polymers of four or more comonomers; preferably however at least one polymer is a terpolymer or at least two polymers are copolymers, in particular in which one monomer, the major component, is ethylene and one or two comonomers, the minor components, are C4 and/or C6 alpha-olefins.

The term homopolymer as employed herein defines a polyethylene consisting essentially of ethylene, i.e. at least 98 wt.-%, more preferably at least 99 wt.-%, more preferably at least 99.5 wt.-% and most preferably at least 99.8 wt.-% of ethylene.

It is especially preferred that the LLDPE polymer be prepared in a two or more stage polymerization in which in an earlier stage the lower alpha-olefin comonomer (e.g. but-1-ene) is incorporated and in which in a later stage the higher alpha-olefin comonomer (e.g. hex-1-ene) is incorporated. Nonetheless, it is within the scope of the invention to employ a polymer produced in a two stage polymerization reaction in which an ethylene homopolymer is produced in the first stage and an ethylene terpolymer is produced in the second stage or vice versa or in which an ethylene copolymer with the higher alpha-olefin comonomer is produced in the first stage and an ethylene copolymer with the lower alpha-olefin comonomer is produced in the second stage. Likewise, an ethylene copolymer may be produced in the first stage and an ethylene terpolymer in the second stage and vice versa. It is also possible to employ a prepolymerization stage as is well known in the art.

In a most preferred embodiment the LLDPE to be employed in the invention is formed from a mixture of an ethylene/but-1-ene copolymer (lower molecular weight component) preferably made in a slurry phase and an ethylene/hex-1-ene copolymer (higher molecular weight component) preferably made in a gas phase.

The LLDPE polymers used in the invention preferably are produced using a so-called single site catalyst, e.g. a catalyst comprising a metal coordinated by one or more-bonding ligands. Such-bonded metals are normally referred to as metallocenes and the metals are typically Zr, Hf or Ti, especially Zr or Hf. The-bonding ligand is typically an 5-cyclic ligand, i.e. a homo or heterocyclic cyclopentadienyl group optionally with fused or pendant substituents. Such metallocene catalysts have been widely described in the scientific and patent literature for about twenty years. Such metallocene catalysts are frequently used with catalyst activators or co-catalysts, e.g. alumoxanes such as methylaluminoxane, again as widely described in the literature.

As indicated above the LLDPE polymer used in the invention preferably is multimodal, e.g. bimodal, i.e. its molecular weight profile does not comprise a single peak but instead comprises the combination of two or more peaks (which may or may not be distinguishable) centered about different average molecular weights as a result of the fact that the polymer comprises two or more separately produced components. In this embodiment, a higher molecular weight component preferably corresponds to a copolymer (or terpolymer etc.) of the higher alpha-olefin comonomer and a lower molecular weight component preferably corresponds to an ethylene homopolymer or a copolymer (or terpolymer etc.) of the lower alpha-olefin comonomer. Such bimodal ethylene polymers may be prepared for example by two or more stage polymerization or by the use of two or more different polymerization catalysts in a one-stage polymerization. Preferably however they are produced in a two-stage polymerization using the same catalyst, e.g. a metallocene catalyst, in particular a slurry polymerization in a loop reactor followed by a gas phase polymerization in a gas phase reactor. A loop reactor- gas phase reactor system has been developed by Borealis A/S, Denmark and is known as BORSTAR technology.

Preferably, the lower molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane. A C4 to C12 alpha-olefin comonomer is preferably added to control the density of the lower molecular weight copolymer fraction.

Preferably, the hydrogen concentration is selected so that the lower molecular weight copolymer fraction has the desired melt flow rate. More preferably, the molar ratio of hydrogen to ethylene is between 0.1 and 1.5 mol/kmol, most preferably, between 0.2 and 1. 0 mol/kmol.

In the case the target density of the lower molecular weight copolymer fraction exceeds 955 kg/m³, it is advantageous to operate the loop reactor using propane diluent in so called supercritical conditions where the operating temperature exceeds the critical temperature of the reaction mixture and the operating pressure exceeds the critical pressure of the reaction mixture. A preferred range of temperature is then from 90 to 110°C and the range of pressures is from 50 to 80 bar.

The slurry is intermittently or continuously removed from the loop reactor and transferred to a separation unit where at least the chain transfer agents (e.g. hydrogen) are separated from the polymer. The polymer containing the active catalyst is then introduced into a gas phase reactor where the polymerization proceeds in the presence of additional ethylene, comonomer (s) and optionally chain transfer agent to produce the higher molecular weight copolymer fraction. The polymer is intermittently or continuously withdrawn from the gas phase reactor and the remaining hydrocarbons are separated from the polymer. The polymer collected from the gas phase reactor is the polyethylene composition of the invention.

The conditions in the gas phase reactor are selected so that the ethylene polymer has the desired properties.

Preferably, the temperature in the reactor is between 70 and 100°C and the pressure is between 10 to 40 bar. The hydrogen to ethylene molar ratio ranges from preferably 0 to 1 mol/kmol, more preferably 0 to 0.5 mol/kmol and the alpha-olefin comonomer to ethylene molar ratio ranges from preferably 1 to 100 mol/kmol, more preferably 5 to 50 mol/kmol and most preferably 5 to 30 mol/kmol.

As indicated above, the preferred LLDPE to be employed in the invention comprises either a bimodal terpolymer comprising a) a lower molecular weight copolymer of ethylene and but-1-ene, and b) a higher molecular weight copolymer of ethylene and a C5 to C12 alpha-olefin (e. g. C6 to C12 alpha- olefin) or a bimodal polymer comprising a) a lower molecular weight polymer which is a binary copolymer of ethylene and a C4 to C12 alpha-olefin and b) a higher molecular weight polymer which is either a binary copolymer of ethylene and but-1-ene, if the lower molecular weight polymer of a) is a binary copolymer of ethylene and a C5 to C12 alpha-olefin (e. g. C6 to C12 alpha-olefin), or a terpolymer of ethylene, but-1-ene and a C5 to C12 alpha-olefin (e. g. C6 to C12 alpha-olefin).

The preferred LLDPE materials to be employed have in one embodiment a relatively narrow molecular weight distribution (MWD) and excellent sealing properties, good processability, low water vapour permeability and a low level of extractibles. The MWD is preferably 2.5 to 10, especially 3.0 to 6.0.

The weight average molecular weight of the multimodal, e. g. bimodal polymer is preferably between 50,000 and 250,000 g/mol. The lower molecular weight polymer fraction preferably has a weight average molecular weight preferably of 5000 to 100,000 g/mol, more preferably of 10,000 to 70,000 g/mol and the higher molecular weight polymer fraction preferably has a weight average molecular weight preferably of 50,000 to 500,000 g/mol, more preferably of 100,000 to 300,000 g/mol.

The polymer is further characterized by its melt flow rate (MFR) according to ISO 1133 at 190°C. The final multimodal, e. g. bimodal polymer preferably has a melt flow rate MFR2 of 1 to 30 g/10min, more preferably of 5 to 25 g/10min. The lower molecular weight polymer fraction preferably has a melt index MFR2 of 5 to 1000 g/10min, more preferably of 10 to 200 g/10min.

The density of the LLDPE polymer is preferably 905 to 940 kg/m3, more preferably of 905 to 935 kg/m3. For the bimodal LLDPE materials the density of the lower molecular weight polymer fraction is preferably 920 to 950 kg/m3, more preferably 925 to 940 kg/m3. The density of the higher molecular weight component polymer fraction is preferably 880 to 910 kg/m3, more preferably 895 to 905 kg/m3. The lower molecular weight component should have a higher density than the higher molecular weight component.

The sealing initiation temperature can be controlled by adjusting the MFR of the polymer and the density of the lower molecular weight component. Higher MFR leads to lower seal initiation temperature. In a highly preferred embodiment the polymers of the invention give rise to a constant heat sealing force over a wide temperature range. Hence, the heat sealing force is substantially constant, e. g. the sealing force is within 2, preferably within 1 N/25.4mm, over a temperature range of at least 30°C, preferably at least 40°C.

The preferred bimodal LLDPE polymers to be employed according to the present invention preferably comprises 30 to 70%, more preferably 35 to 60% and most preferably 38 to 55% by weight of the lower molecular weight copolymer fraction with regard to the total composition of the sum of high molecular weight fraction and low molecular weight fraction.

The overall comonomer content in the LLDPE polymer is preferably 0.5 to 10 mol%, preferably 1.5 to 6.5 mol%, more preferably 2 to 5 mol% and the preferred bimodal LLDPE materials the lower molecular weight polymer has a comonomer content of preferably from 0 to 2.0 mol%, preferably 0.5 to 1.5 mol%. In the higher molecular weight polymer the comonomer content is preferably 1.5 to 8 mol%, preferably 3.5 to 6 mol%.

Comonomer contents may be measured by NMR.

The melting point of the polymer may be between 100 to 130°C, preferably 110 to 120°C.

Further, the molecular weight of the higher molecular weight copolymer fraction should be such that when the lower molecular weight copolymer fraction has the melt index and density specified above, the final bimodal polymer has the melt index and density as discussed above.

In addition to the polymeric components themself, the heat sealing layer of the invention may also contain antioxidants, process stabilizers, pigments and other additives known in the art. Moreover, the multimodal single site catalyst ethylene polymer with two other alpha-olefin comonomers may be blended with other polymers while retaining sealing and mechanical properties suitable for the desired end-uses. Examples of such further polymers which may be used include LDPE, HDPE, MDPE, LLDPE, EMA, EBA, and EVA. Typically, up to about 50% wt of the overall polymer may be constituted by much further polymers, more preferably up to 30% wt in the case of HDPE, or MDPE.

A particularly preferred LLDPE material is an LLDPE material prepared using the Borstar technology being a bimodal LLDPE material, and in particular, preferably the LLDPE material is a bimodal LLDPE terpolymer, comprising a bimodal molecular weight distribution and a bimodal distribution of the two comonomers (one being present in the lower molecular weight part and one being present in the higher molecular weight part). An illustrative example of such a LLDPE material is a terpolymer comprising as comonomer 1-butene and 1-hexene, with 1-butene being present in the lower molecular weight part as illustrated above.

In a preferred embodiment, the LLDPE polymer is blended with LDPE, said LDPE preferably having a melt index of at least 3 g/10 min, preferably at least 6.5 g/10 min and being designed for extrusion coating. The LDPE may form 15 to 35 wt% of the final blend.

The low-density polyethylene (LDPE) is typically produced in a high-pressure process. In such processes ethylene is polymerized at an elevated temperature of from 150 to 350°C and at a high pressure of from 1000 to 3000 bar. The polymerization reaction is initiated by using free radical initiators. Ethylene and at least one initiator are introduced into the reactor at a high temperature and pressure. The polymerization reaction occurs in solution comprising ethylene in a supercritical state and polyethylene dissolved therein in a short time, typically less than 10 minutes and usually from about 30 seconds to about 5 minutes. The reaction mixture including the polymer is withdrawn from the reactor, unreacted ethylene is removed from the solution and the polymer melt is extruded, cooled, cut into pellets and recovered. A short description of high pressure processes for ethylene polymerization is given, among others, in Vieweg, Schley and Schwarz: Kunststoff Handbuch, Band IV, Polyolefine, Carl Hanser Verlag (1969), pages 39 to 51.

Preferably the polymerization process is conducted in an autoclave reactor. The autoclave reactor is a continuously operating stirred reactor. In such reactors it is common to have multiple entry points for ethylene and initiator. Usually there is one withdrawal point for the polymer solution, but it is possible to have also multiple product withdrawal points.

Thus, the autoclave reactor can be considered to comprise different zones. A first zone is located in the upstream part of the reactor and the first ethylene and initiator feeds occur in this zone. A second zone is located downstream of the first zone, and ethylene and initiators are also introduced into the second zone. A third zone is located further downstream of the second zone. Into the third zone ethylene is introduced and also minor amounts of initiator may be introduced, even though this is not necessarily done. Downstream of the third zone is a fourth zone, from which the reaction product is withdrawn. Ethylene may be introduced into the fourth zone also. However, initiator is not usually introduced into the fourth zone.

Because the high viscosity of the reaction mixture and low heat transfer area the heat transfer through the autoclave wall is usually insufficient to remove the heat of the reaction. Therefore, the most useful way to control the temperature in the polymerization reactor is by ethylene and initiator feeds to the different zones. Such methods are known to the person skilled in high-pressure ethylene polymerization technology.

In the preparation of the LDPE polymer to be employed according to the present invention the polymerization is preferably conducted at a pressure of 1200 to 2000 bar, more preferably from 1350 to 1700 bar. The temperature within the autoclave is preferably from 230 to 300°C. More preferably, the temperature in the first zone of the reactor is from 230 5 to 255°C, and the temperature in the fourth zone of the reactor is from 270 to 300°C.

The initiators commonly known in the art may be employed. While the low-density ethylene polymer of the invention may be produced with one initiator only, it is preferred to use multiple initiators, which are introduced to different entry points in the reactor. Typically, the initiators are introduced into the first and second zones of the reactor.

Especially preferably, a first initiator or a mixture of first initiators is introduced into the first zone and/or the second zone of the reactor and a second initiator or a mixture of second initiators is introduced into the second zone and/or third zone of the reactor. Preferably the first initiator or the first mixture of initiators comprises from about 50 to 80%, more preferably from 60 to 75% by weight of the total amount of the initiators, and the second initiator or the second mixture of initiators comprises from about 20 to 50%, more preferably from 25 to 40% by weight of the total amount of the initiators.

Compounds suitable to be used as the first initiator preferably have a half-life of 0.1 hours at a temperature within the range of from 120 to 152°C, a half life of 1 hour at a temperature within the range of from 100 to 131°C and a half life of 10 hours at a temperature within the range of from 81 to 111°C. As the person skilled in the art knows, the half-life of 1 hour at a certain temperature means that at that temperature 50% of the initial amount of initiator has decomposed after one hour. Examples of compounds suitable to be used as the first initiator are, among others, tertbutyl peroxyacetate (CAS number 107-71-1), tert-butylperoxy-2-ethylhexyl carbonate (34443-12-4), tert-butyl peroxy-benzoate (614-45-9), tertbutylperoxy isopropyl carbonate (2372-21-6), 2,2-di(tertbutylperoxy) butane (2167-23-9) and tert-butylperoxy-3,5,5-trimethylhexaonate 5 (13122-18-4).

Compounds suitable to be used as the second initiator preferably have a half-life of 0.1 hours at a temperature within the range of from 152 to 200°C, a half life of 1 hour at a temperature within the range of from 131 to 10 170°C and a half life of 10 hours at a temperature within the range of from 111 to 141 °C. Examples of such compounds are, among others, di-tertbutylperoxide (110-05-4), 3,6,9-triethyl-3,6,9-trimethyl-1,4,7-triperoxononane (24748-23-0), isopropylcumyl hydroperoxide (26762-93-6) and cumyl hydroperoxide (80-15-9).

The LDPE component to be employed typically has a MFR value and a density as follows:
MFR: 2 to 15 g/10min (measured as indicated herein), preferably 2.5 to 10 g/10min and in particular 3 to 6 g/10min
Density: 910 to 935 kg/m3

The coating thickness of the heat-sealing layer in accordance with the present invention typically amounts to 1 to 10 gsm, more preferably 3 to 7 gsm, and in particular about 5 gsm.

The heat sealing layer in accordance with the present invention may contain additional components, such as typical processing aides, stabilizers, colorants as well as fillers, but the heat sealing layer in accordance with the present invention may also consist essentially of the polyolefin, in particular the preferred polyolefins disclosed above, in combination with processing aides and stabilizers in amounts as indicated herein. If employed, the additional compounds may be present in amounts of up to 2 wt% each, preferably, however, the overall content of additional components does not exceed 5 wt%, more preferably 3 wt% and most preferably 2 wt%.

### Grease barrier layer

The grease barrier layer to be employed in accordance with the present invention preferably comprises a propylene polymer, i.e. a propylene homopolymer. The terms polypropylene, propylene polymer, propylene homopolymer refer generally to isotactic polymers. Isotacticity as expressed by the IR_{T} value typically is above 0.9 (90%) and in embodiments 0.92 or more, such as 0.96 or more or even 0.98 or more. The IR_{T} value is determined as described in EP 0 277 514 A2. Polypropylene is a highly suitable polymer for providing grease barrier properties, and in addition, typical polypropylenes also provide excellent water vapor barrier properties. Suitable polypropylenes to be employed in accordance with the present invention are homopolymers as well as copolymers and suitable polypropylenes are polymers enabling a suitable high coating speed, in particular for extrusion coating, which requires in particular a suitable melt strength and high drawability of the polymer melt. Suitable polypropylenes to be employed in accordance with the present invention typically display an MFR (230°C, 2.16 kg load) of from 15 to 30 g/10 min, preferably 20 to 25 g/10 min, such as about 22 g/10 min having melting temperatures in the range of from 155 to 170°C, preferably 160 to 165°C, and softening temperatures of at least 150°C.

The polypropylene to be employed as grease barrier layer may be monomodal or may be bimodal, with respect to the molecular weight distribution as well as with respect to the comonomer distribution (if contained). Preferred in accordance with the present invention are homopolymers of propylene and a particular suitable example thereof is Daploy WF420HMS, a commercial product of Borealis.

According to a preferred embodiment of the invention, the propylene polymer has long chain branches. The amount of branching is determined using the branching index g' of the branched propylene polymer. The branching index g' is defined as g' = [IV]br/[IV]lin|Mw in which g' is the branching index, [IV]br is the intrinsic viscosity of the branched propylene polymer and [IV]lin is the intrinsic viscosity of the linear polypropylene having the same weight average molecular weight as the branched polypropylene. It is well known in the art that as the g' value decreases, branching increases. See B.H. Zimm and W.H. Stockmayer, J. Chem. Phys. 17, 1301 (1949).

Typically, the branching index g' of the propylene polymer which is used for the multilayer structures of the present invention is in the range of from 0.60 to below 1, such as from 0.7 to 0.9. Preferably, the branching index g' of the propylene polymer which is used for the multilayer structures of the present invention is less than 0.88. More preferably, the branching index g' of the propylene polymer which is used for the multilayer structures of the present invention is less than 0.85. Most preferably, the branching index g' of the propylene polymer which is used for the multilayer structures of the present invention is less than 0.80.

According to an important aspect of the invention the grease barrier layer is immediately adjacent to the heat sealing layer. It was observed, that for achieving good phase adhesion between these layers , it is not necessary to use an intermediate adhesive layer. This allows to produce the multilayer structures of the invention more cost efficiently than with the use of adhesive layers. A further advantage of not having to use an adhesive layer is, that any potential detrimental effects which the adhesive layer could have on e.g. optical properties, suitability for food-contact applications, etc. are avoided.

Preferably, the propylene polymer of the grease barrier layer of the present invention is a polymer having an MFR of 0.1 to 50 g/10 min (230°C, 2.16 kg).

While the grease barrier layer may only comprise the above described propylene polymer it is also possible according to an embodiment of the multilayer structures of the invention, that the grease barrier layer comprises 5-95 wt% of the propylene polymer having a branching index g' < 1 and 95-5 wt% of a propylene polymer, typically another propylene homopolymer, however also propylene copolymers might be suitable. Preferred ranges are 5 to 75 wt% modified propylene polymer with g' < 1 and 95 to 25 wt% of the other propylene polymer, more preferably 5 to 50 amd 95 to 50 wt% respectively.

A propylene polymer having a branching index g' < 1 is advantageously used in a blend with one or more further propylene polymers. The further propylene polymers may be any one or more of propylene homopolymers or copolymers. The propylene copolymers comprise copolymers with ethylene and/or a-olefins having 4 to 12 carbon atoms. The copolymers may further comprise random copolymers and block copolymers. According to this advantageous embodiment, suitable propylene homo- and/or copolymers are chosen to comprise from 50 to 95 wt% of the grease barrier layer in order to achieve multilayer structures having the desired properties. Such propylene homo- and/or copolymers are commercially available or can be easily produced according to procedures which are well known in the art, see e.g. Moore, E. P., Polypropylene Handbook, Hanser, New York, 1996, pages 11 to 98.

With regard to the above-described embodiment, it is preferred, that the grease barrier layer comprises 50 to 95 wt% of a propylene homo- and/or block copolymer.

### Production of propylene polymer with long chain branches

The propylene polymer may be produced by single- or multistage process polymerization of propylene such as bulk polymerization, gas phase polymerization, slurry polymerization, solution polymerization or combinations thereof using conventional catalysts. A polymer can be made either in loop reactors or in a combination of loop and gas phase reactor. Those processes are well known to one skilled in the art.

A suitable catalyst for the polymerization of the propylene polymer is any stereospecific catalyst for propylene polymerization which is capable of polymerizing and copolymerizing propylene and comonomers at a temperature of 40 to 110°C and at a pressure from 10 to 100 bar. Ziegler Natta catalysts as well as metallocene catalysts are suitable catalysts.

One skilled in the art is aware of the various possibilities to produce propylene homopolymers and will simply find out a suitable procedure to produce suitable polymers which are used in the present invention, see e.g. Moore, E. P., Polypropylene Handbook, Hanser, New York, 1996, pages 89 to 91. In accordance with the present invention, a linear propylene polymer is used or a polymerization process is chosen which results in the formation of linear propylene polymer.

### Production of propylene polymers with g' < 1

Propylene polymers having long chain branches are produced starting with linear propylene polymers.

The propylene polymer with long chain branches is preferably produced by mixing the linear propylene polymer, which is in a particulate shape, with an effective amount of an organic peroxide at a temperature of from 30 to 100°C. The peroxide must be decomposable at higher temperatures and serves as free-radical generator. Preferred peroxides are acyl peroxides, alkyl peroxides, hydroperoxides, peresters and/or peroxycarbonates. The peroxides may be applied in pure form or in a solution of an inert organic solvent. Preferably, the amount of peroxide is 0.05 to 3 wt%, based on the weight of the propylene polymer.

Volatile bifunctional monomers are absorbed by the particulate polymer from the gas phase at temperatures of from 20 to 120°C, preferably from 70 to 90°C. Preferably, the amount of bifunctionally unsaturated monomer is from 0.01 to 10 wt%, more preferably from 0.05 to 2 wt%, based on the weight of the propylene polymer.

The mixture containing the peroxide and the bifunctional monomers is heated and molten at a temperature of up to 210°C, preferably in an atmosphere comprising inert gas and/or volatile bifunctional monomer. The peroxide is decomposed and reactions between the resulting free radicals, the polymer chains and the bifunctional monomers occur.

Finally, the melt is heated to 220 to 250°C in order to remove unreacted monomers and decomposition products. The heating and melting steps are preferably performed in continuous kneaders or extruders, with preference in twin-screw extruders. The molten propylene polymer with long chain branches is then cooled and pelletized.

The average sorption time of the volatile bifunctional monomers on the particulate polymer is advantageously from 10 to 1000 seconds, preferably from 20 to 800 seconds, particularly preferably from 60 to 600 seconds. The absorption of the volatile bifunctional monomers is preferably performed in continuous through-flow mixers.

Examples of suitable organic peroxides are:
- Acyl peroxides, such as benzoyl peroxide, 4 chlorobenzoyl peroxide, 3 methoxybenzoyl peroxide and/or methylbenzoyl peroxide;
- Alkyl peroxides such as allyl tert butyl peroxide, 2,2 bis(tert-butylperoxybutane), 1,1 bis(tert-butylperoxy)-3,3,5 trimethylcyclohexane, n butyl 4,4 bis(tertbutylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1 di(tert-amylperoxy)cyclohexane, tert-amyl peroxide, tert-butyl cumyl peroxide, tert-butyl peroxide, and/or 1 hydroxybutyl n butyl peroxide;
- Peresters and peroxycarbonates, such as butyl peracetate, cumyl peracetate, cumyl perpropionate, cyclohexyl peracetate, di tert-butyl peradipate, di tert-butyl perazelate, di tert-butyl perglutarate, di tert-butyl perphthalate, di tert-butyl persebacate, 4 nitrocumyl perpropionate, 1 phenylethyl perbenzoate, phenylethyl nitroperbenzoate, tert-butyl bicyclo[2.2.1]heptanepercarboxylate, tert-butyl 4 carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2 (2,2 diphenylvinyl)perbenzoate, tert-butyl 4 methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl 1 phenylcyclopropylpercarboxylate, tert-butyl 2 propylperpenten-2 oate, tert-butyl 1 methylcyclopropylpercarboxylate, tert-butyl 4 nitrophenylperacetate, tert-butyl nitrophenylperoxycarbamate, tert-butyl N succinimidopercarboxylate, tert-butyl percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate;
and mixtures of these peroxides.

Volatile bifunctional monomers which are preferably used for the preparation of the propylene polymer with long chain branches include:
- divinyl compounds, such as divinylaniline, m divinylbenzene, p divinylbenzene, divinylpentane and/or divinylpropane;
- allyl compounds, such as allyl acrylate, allyl methacrylate, allyl methyl maleate and/or allyl vinyl ether;
- dienes, such as butadiene, chloroprene, cyclohexadiene, cyclopentadiene, 2,3 dimethylbutadiene, heptadiene, hexadiene, isoprene and/or 1,4 pentadiene;
and mixtures of these monomers.

Especially preferred are butadiene, isoprene, dimethylbutadiene and/or divinylbenzene.

During the preparation of the modified olefin polymers, the heating and melting of the polyolefin particles within which the bifunctionally unsaturated monomers and the acyl peroxides, alkyl peroxides, hydroperoxides, peresters and/or peroxycarbonates have been sorbed as free-radical generators capable of thermal decomposition takes place in an atmosphere of the volatile bifunctionally unsaturated monomers, preferably in continuous kneaders or extruders, with preference in twin-screw extruders.

As a result of the process for producing the propylene polymer having g' < 1, the MFR, compared to the starting material, is increased. Depending upon the melt strength of the starting material, the melt strength of the produced long chain branched polymer may be increased, decreased or substantially unaltered.

The grease barrier layer in accordance with the present invention may consist of the polypropylene material only, but also may include various other additives, such as commonly employed processing aides, fillers, colorants, and stabilizers. If employed, the additional compounds may be present in amounts of up to 2 wt% each, preferably, however, the overall content of additional components does not exceed 5 wt%, more preferably 3 wt% and most preferably 2 wt%.

Suitable coating weights for the grease barrier layer in accordance with the present invention are values of from 10 to 30 gsm, preferably 15 to 25 gsm, such as about 20 gsm.

### Light barrier layer

The light barrier layer in accordance with the present invention typically comprises a polyolefin in a mixture with at least one coloring agent, selected among organic and inorganic coloring agents, including dyes and pigments. Particularly suitable are coloring agents selected among metal oxides and carbon black, in particular titanium dioxide and carbon black. In a particular preferred embodiment in accordance with the present invention, the light barrier layer comprises a combination of a metal oxide and carbon black, most preferably titanium dioxide and carbon black. This combination of colorants enables a suitable barrier with respect to light, in particular for packaging fatty food, including snack food, etc. A further benefit for particularly selecting a combination of titanium dioxide and carbon black as coloring agent is the achieved metal-like appearance (like aluminum) without any metal actually being used.

A suitable polyolefin to be employed for the light barrier layer is a polyethylene, in particular a homopolyethylene. The colorant content in the light barrier layer typically amounts to 2.5 to 12.5 wt%, more preferably 5 to 10 wt%, and in particular 6.5 to 8 wt%. If a mixture of metal oxide and carbon black is employed, these components may preferably be employed in a weight ratio of 10:1 to 100:1, more preferably in a weight ratio of 30:1 to 80:1 and in particular in a weight ratio of 40:1 to 70:1. In the case of titanium oxide as the metal oxide the amount of carbon black may preferably be in a range of 0.05 - 0.25 wt%, more preferably in a range of 0.10 - 0.20 wt% and in particular in a range of 0.12 -0.15 wt%. These ratios and amounts of titanium oxide and carbon black ensure the best light barrier and aluminum-like appearance.

### Grease/light barrier layer

If a single grease/light barrier layer is employed in the packaging laminate in accordance with the present invention, same comprises as polymer component a polypropylene as defined above in connection with the grease barrier layer, admixed with at least one coloring agent as disclosed above in connection with the light barrier layer. The respective preferred embodiment as disclosed there applies here with respect to the grease/light barrier layer.

The embodiment that the grease barrier and the light barrier are a single grease/light barrier layer comprising the polypropylene as described above in connection with the grease barrier layer and the coloring agent(s) as described in connection with the light barrier layer is a preferred embodiment of the present invention.

### Laminate

The packaging laminate in accordance with the present invention is metal free and provides the appearance and feel of a paper packaging material, so that the packaging material in accordance with the present invention will be highly accepted by consumers. At the same time, the use of polyolefins for the various functional layers (grease barrier, light barrier, and heat sealing) enables the easy production of the packaging laminate by coextrusion coating technology. The use of polymers such as EVOH and condensation polymers, such as polyamides, for functional layers can be avoided and the accordingly the material composition is as uniform as possible. In preferred embodiments the packaging laminate of the present invention comprises, in addition to the paper substrate and the optional adhesive layer(s) only layers prepared from polyolefins. Highly sophisticated, complicated and rather costly processes as employed in the prior art for orienting films, etc. and for metallising films are no longer required, so that the overall process for preparing the packaging material in accordance with the present invention is suitably simple to carry out. The paper substrate employed in accordance with the present invention furthermore enables an easy printing of the material in order to provide the desired color, product description, and product information essential in most packaging applications, in particular packaging applications in the field of snack foods, etc. The packaging laminate in accordance with the present invention furthermore enables an easy opening of the closed package, so that ready to use food, such as snack food, is made readily accessible for the consumer.

As identified above, the packaging laminate in accordance with the present invention may be prepared by coextrusion processes, which are known to the skilled person.

The extrusion coating process may be carried out using conventional extrusion coating techniques. Hence, the polymer obtained from the polymerization process is fed, typically in the form of pellets, optionally containing additives, to an extruding device. From the extruder the polymer melt is passed through a flat die to the substrate to be coated. Due to the distance between the die lip and the nip, the molten plastic is oxidized in the air for a short period, usually leading to an improved adhesion between the coating and the substrate. The coated substrate is cooled on a chill roll, after which it is passed to edge trimmers and wound up. The width of the line may vary between, for example, 500 to 1500 mm, e.g. 800 to 1100 mm, with a line speed of up to 1000 m/min, for instance 300 to 800 m/min. The temperature of the polymer melt is typically between 275 and 330°C.

In a multilayer extrusion coating, the other layers may comprise any polymer resin having the desired properties and processability. Examples of such polymers include: HDPE for stiffness; polypropylene for improving heat resistance and grease resistance; LDPE resins produced in a high- pressure process; LLDPE resins produced by polymerizing ethylene and alpha-olefin comonomers in the presence of a Ziegler, chromium or metallocene catalyst; and MDPE resins.

Due to the use of the defined layers in accordance with the present invention it is possible to avoid the use of oth erpolymeric materials widely employed in conventional packaging laminates, such as barrier layers of PA (polyamide) and EVA; polar copolymers of ethylene, such as copolymers of ethylene and vinyl alcohol or copolymers of ethylene and an acrylate monomer; adhesive layers, e.g. ionomers, copolymers of ethylene and ethyl acrylate, etc.

Experimental: Melt flow rate (MFR, sometimes also referred to as melt index) for polyethylenes according to ISO 1133, at 190°C. for polypropylenes at 230°C. The load used in the measurement is indicated as a subscript, i.e. MFR₂ denotes the MFR measured under 2.16 kg load.

Molecular weights and molecular weight distribution were determined by size exclusion chromatography (SEC) using Waters Alliance GPCV2000 instrument with online viscometer. Oven temperature was 140°C. Trichlorobenzene was used as a solvent.

Density was determined according to ISO 1183-1987.

But-1-ene and hex-1-ene contents of the polymers were determined by 13C NMR.

Melting temperature and crystallinity was determined by differential scanning calorimetry (DSC) using Mettler Toledo DSC822, with heating and cooling rate of 10°C/min.

### Polymerisation Example 1 (example for preparing a LDPE)

A polymerization reactor of autoclave type was used. Ethylene was introduced into the reactor to the different levels so that the temperatures at each level were at a rate of 74 tons per hour. Two initiators were used so that initiator 1 was introduced to levels 9 and 7 and initiator 2 into level 5. Initiator 1 was a peroxide having a half life of 0.1 hours at a temperature of 142°C, a half life of 1 hour at a temperature of 122°C and a half life of 10 hours at a temperature of 103°C. Initiator 2 had a half-life of 0.1 hours at a temperature of 164°C, a half-life of 1 hour at a temperature of 141 °C and a half-life of 10 hours at a temperature of 121 °C. The pressure within the reactor was 1500 bar and the temperature at different levels was from 242 to 284°C. The conditions can be seen in Table 1.

The polymer collected from the reactor was extruded into pellets. It had MFR₂ of 4.5 g/10 min and a density of 920 kg/m³. It further had Mₙ of 17500 g/mol, M_{w} of 629000 g/mol and M_{z} of 3520000 g/mol.

The polydispersity index, M_{w}/Mₙ was thus 36.

**Table 1: reactor conditions**

| Reactor condition | Unit | Value |
|---|---|---|
| Temperature, level 9 | °C | 242 |
| Temperature, level 8 | °C | 242 |
| Temperature, level 7 | °C | 242 |
| Temperature, level 6 | °C | 252 |
| Temperature, level 5 | °C | 259 |
| Temperature, level 4 | °C | 275 |
| Temperature, level 3 | °C | 280 |
| Temperature, level 2 | °C | 281 |
| Temperature, level 1 | °C | 284 |
| Pressure | bar | 1516 |
| Initiator feed, level 9 | kg/h | 25 |
| Initiator feed, level 7 | kg/h | 17.5 |
| Initiator feed, level 5 | kg/h | 17.5 |
| Initiator feed, level 3 | Kg/h | 3 |
| Production rate | t/h | 8.5 |

### Polymerisation Example 2 (example for preparing a LLDPE)

The catalyst was prepared according to the instructions of Catalyst Preparation Example 2 of WO 2005/002744.

A continuously operating loop reactor having a volume of 500 dm³ was operated at 85°C temperature and 60 bar pressure. Into the reactor were introduced propane diluent, ethylene, 1-butene comonomer, hydrogen and the polymerization catalyst prepared according to Catalyst Preparation Example 2 referred to above in such amounts that the ethylene concentration in the liquid phase of the loop reactor was 7% by mole, the ratio of hydrogen to ethylene was 0.65 mol/kmol, the ratio of 1-butene to ethylene was 155 mol/kmol and the polymer production rate in the reactor was 25 kg/h. The thus formed polymer had a melt index MFR₂ of 140 g/10 min and a density of 935 kg/m³.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 75°C temperature and 20 bar pressure. Into the gas phase reactor were also introduced additional ethylene, 1-hexene comonomer and nitrogen as inert gas in such amounts that the ethylene concentration in the circulating gas was 22% by mole, the ratio of hydrogen to ethylene was about 0.7 mol/kmol, the ratio of 1-hexene to ethylene was 18 mol/kmol and the polymer production rate was 25 kg/h.

The production split between the loop and gas phase reactors was thus 50/50.

### Blend Example 3 (example for preparing a blend of LDPE and LLDPE)

The polymer of Example 2 was stabilized by adding to the powder 400 ppm Irganox B561. The stabilised polymer was then mixed with polymer pellets obtained from Example 1 so that the content of LDPE from Example 1 was 5 25% by weight of the total blend. The mixture was then extruded and pelletised under nitrogen atmosphere with a CIM90P extruder, manufactured by Japan Steel Works. The melt temperature was about 200°C, throughput 280 kg/h and the specific energy input (SEI) was 200 kWh/t.

The polymer pellets had a melt index MFR₂ of 15 g/10 min, a density of 920 kg/m³, a 1-butene content of 2.1% by weight and a content of 1-hexene of 6.3% by weight.

### Example 4

In a first step a linear propylene homopolymer is produced in a multistage process polymerization of propylene in a combination of loop and gas phase reactor. A Ziegler-Natta catalyst is used at a polymerization temperature of 70°C. Polymer powder obtained from this polymerization is impregnated with 0.25 wt% tert.-butylperoxy isopropyl carbonate and 0.5 wt% butadiene at 100°C for 15 min. The mixture is heated to a temperature of 200°C under inert gas atmosphere (nitrogen) and is then further heated to 230°C and subsequenly granulated. The obtained polymer shows an MFR 230/2.16 of 22 g/10min and a branching index g' of 0.75.

### Example

An example in accordance with the present invention was prepared employing Super Perga Parchment Wet Strength of Nordic Paper (41 gsm) as paper substrate, an adhesive layer of 10 gsm made from Elvaloy AC applied on one surface thereof, followed by a grease/light barrier layer made from a polypropylene material according to Example 4 (20 gsm) comprising titanium dioxide (7.5 wt%) and carbon black (0.13 wt%), and a heat sealing layer made from (5 gsm) a blend according to Blend Example 3 of a LLDPE (bimodal terpolymer with 1.butene and 1-hexene) (2/3, weight ratio based on LLDPE + LDPE) and a LDPE (1/3, weight ratio) material.

Food packages were prepared from this packaging laminate and first manual tests with respect to opening properties revealed that the desired easy opening is achieved, without sacrificing the initial feeling of the packaged food. The packaging also had a distinct metal-like appearance.

## Claims

1. Packaging laminate comprising a paper substrate, a grease barrier layer, a light barrier layer and a heat sealing layer, wherein the grease barrier layer, the light barrier layer and the heat sealing layer comprise polyolefins, and wherein the grease barrier layer and the light barrier layer may be a single grease/light barrier layer.

2. Packaging laminate in accordance with claim 1, wherein the paper substrate is a greaseproof paper.

3. Packaging laminate in accordance with claim 1 or 2, wherein the heat sealing layer comprises an LLDPE material.

4. Packaging laminate in accordance with claim 1, 2 or 3, wherein the grease barrier layer or the grease/light barrier layer comprises a polypropylene.

5. Packaging laminate in accordance with claim 4, wherein the polypropylene is a homopolypropylene.

6. Packaging laminate in accordance with claim 1, 2, 3, 4 or 5, wherein an adhesive layer further is provided between the paper substrate and the grease barrier layer or the grease/light barrier layer.

7. Packaging laminate in accordance with claim 1, 2, 3, 4, 5 or 6, wherein the light barrier layer or the grease/light-barrier layer comprises a mixture of a metal oxide and carbon black.

8. Packaging laminate in accordance with claim 7, wherein the metal oxide is titanium dioxide.

9. Packaging laminate in accordance with claim 7 or 8, wherein the metal oxide and the carbon black are present in weight ratio of 10:1 to 100:1.

10. Process for preparing a packaging laminate in accordance with any one of claims 1 to 9, comprising the step of coextrusion coating of the barrier and heat sealing layers as defined in claims 1 to 9 on a paper substrate.

11. Process in accordance with claim 10, wherein the coating weight of the heat sealing layer is from 1 to 15 gsm.

12. Process in accordance with claim 10 or 11, wherein the coating weight of the grease barrier layer is from 10 to 30 gsm.

13. Process in accordance with claim 10, 11 or 12, wherein the process further comprises the step of extruding an adhesive layer onto the paper substrate, prior to the coating thereof with the barrier and heat sealing layers.

14. Process in accordance with claim 10, 11, 12 or 13, wherein the paper substrate is a greaseproof paper.

15. Process in accordance with claim 10, 11, 12, 13 or 14, wherein the paper substrate has a basic weight of from 30 to 50 gsm.
